(19)

**Europäisches Patentamt**
**European Patent Office**
**Office européen des brevets**

(11) **EP 2 894 558 A1**

(12) **EUROPEAN PATENT APPLICATION**

(43) Date of publication:
**15.07.2015 Bulletin 2015/29**

(51) Int Cl.:
**G06F 3/06** (2006.01)

(21) Application number: **14368009.8**

(22) Date of filing: **13.01.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventor: **Bostoen, Tom**
**2018 Antwerpen (BE)**

(74) Representative: **Plas, Axel Ivo Michel**
**IP HILLS NV**
**Hubert Frère-Orbanlaan 329**
**9000 Gent (BE)**

(54) **Online power management in a content distribution network**

(57) According to an embodiment the invention provides a control device for power management of cache servers in a Content Distribution Network or CDN. These cache servers comprise cache disks. The control device is further configured to execute several steps, at the start of a time interval $T_{j+1}$. In a first step (201), a disk read rate surplus observed during a previous time interval $T_j$ is determined. In a second step (203), this disk read rate surplus is compared with a minimum disk read rate surplus. During a last step (204), a number of inactive disks of the cache disks is activated if the disk read rate surplus is smaller than this minimum disk read rate surplus.

Fig. 2

EP 2 894 558 A1

**Description**

**Field of the Invention**

The invention relates to the field of Content Distribution Networks or CDNs, more particular to the power management of cache servers within a CDN.

**Background of the Invention**

The growing end-user demand for video services with superior quality on laptops, tablets, and smartphones spurs the deployment of content distribution networks or CDNs. Such a CDN can provide highly available and bandwidth-efficient video delivery over a data network such as the internet by cache servers packed with cache disks deployed in data centres near the end user. When an end-user and thus a client requests a video or, more generally, a data stream from a content provider or content source, it is first checked whether the stream is available on one of the cache servers. If so, the data stream is provided by the appropriate cache server to the client. As the cache server is located closer to the end user than the content source, bandwidth is saved. If the content is not available on one of the cache servers, the CDN will retrieve the content from another cache server in the CDN or from the content provider.

However, a sustainable growth of these CDNs may be hindered by their lack of energy proportionality as a CDN is dimensioned according to the peak download and upload rate, i.e. the rate between the CDN and end-user and the rate between the CDN and content provider respectively. This results in cache servers which run idle part of the time thereby consuming power and cache disks which provide a higher disk read rate than required by the service level agreement during part of the time. It is therefore an object to limit the energy consumption of CDNs and thus provide an efficient power management of the cache servers, for example in a data centre.

In "Energy-aware load balancing in content delivery networks" by V. Mathew et al. published in Proceedings of the 31st annual IEEE international conference on computer communications, INFOCOM '12, pages 954-962, Los Alamitos, CA, USA, 2012, an online Dynamic Power Management or online DPM policy is proposed. With this policy, cache servers are turned on and off according to the workload of the cache servers. As the policy is online, it is not aware of the future workload of the CDN but bases the decision to turn on and off cache servers on the past observed workload, i.e. the required download rate from the cache servers to the end user. While this policy allows reducing the consumed power in a CDN, the active cache servers may still comprise cache disks that are active while not required by the service level agreement.

In "Minimizing energy dissipation in content distribution networks using dynamic power management" by T. Bostoen et al. published in Proceedings of the 3rd IEEE International Conference on Cloud and Green Computing, CGC '13, pages 203-210, Los Alamitos, CA, USA, 2013, an offline DPM policy is proposed. Apart from switching cache servers on and off, this policy also switches on and off cache drives in the active cache servers. The decision to switch off a cache drive is based on the upload rate of the CDN as switching off a cache drive in a cache server will result in less data that can be cached in the cache server and, therefore, more data that has to be fetched upstream from the content provider. However, the presented policy is an offline policy, i.e., the optimal power states of the cache servers and cache drives are searched for using knowledge of the future workload, and therefore not implementable in an actual CDN but only usable as a near optimal benchmark.

It is therefore an object of the invention to alleviate the above problems and drawbacks and provide efficient online power management of cache disks and cache servers.

**Summary of the Invention**

This is achieved, in a first aspect, by a control device for power management of cache servers in a Content Distribution Network or CDN. The cache servers comprise cache disks and the control device is further configured to execute the following steps, at the start of a time interval $T_{j+1}$:

- determining a disk read rate surplus $R_{sp,j}$ during a previous time interval $T_j$;

- comparing this disk read rate surplus $R_{sp,j}$ with a minimum disk read rate surplus $R_{sp,j}^{min}$;

- activating a number of inactive disks of the cache disks if $R_{sp,j}$ is smaller than $R_{sp,j}^{min}$.

When an active disk is operational in a CDN, for example in a data centre of a CDN or CDN data centre, it reduces the required upload rate, i.e. the data rate between the CDN and the content provider or between data centres within the CDN, by an amount referred to as the disk's read rate. The disk read rate varies over time and across disks according to the match between the time-varying content stored on the disk and the workload, which also changes over time. The disk read rate surplus $R_{sp,j}$ for all cache servers in the CDN under consideration is defined as the difference between a predetermined upload rate limit and a required upload rate during this previous time interval. The predetermined upload rate limit is a configurable parameter specifying the minimal performance of the CDN as it puts an upper bound to the rate between the CDN and content provider. The required upload rate is the upload rate that was actually measured during the previous time interval. The upload rate considered is only for content that is to be stored on cache disks such as for example Video on Demand or VOD content. By activating inactive disks when the disk read rate surplus is smaller than a threshold, i.e. the minimum disk read rate surplus, it is made sure that just enough cache disks are active for the coming next time interval.

It is an advantage that the decision to activate cache disks is based on a previous time interval as this makes the device suitable for online power management, i.e. no information is needed about the future upload rate.

By using the minimum disk read rate surplus as a threshold it is ensured that a buffer of cache disks is kept active such that the required upload rate stays below the upload rate limit during the next time interval.

The above control device may also perform the above steps for a subset of cache servers in a CDN, for example for cache servers in a certain data centre of the CDN or, shorter, a CDN data centre.

According to an embodiment, the control device is further configured to execute the following steps, at the start of the time interval $T_{j+1}$:

- determining the minimum disk read rate surplus $R_{sp,j}^{min}$ as proportional to a maximum increase of a required upload rate per time interval observed over a first predetermined number of previous time intervals.

It is thus observed how the required upload rate has changed between time intervals and the minimum disk read rate surplus is made proportional to the greatest observed change. This way, the minimum disk read rate surplus is made adaptive. As it is made proportional a trade-off may be made between bandwidth efficiency and energy saving by choosing the proportionality factor.

According to an alternative embodiment, the control device is further configured to execute the following steps, at the start of said time interval $T_{j+1}$:

- determining the minimum disk read rate surplus $R_{sp,j}^{min}$ as proportional to a maximum of:

  - a maximum increase of a required upload rate per time interval observed over a first predetermined number of previous time intervals;
  - an upload spike rate of the largest flash crowd observed during previous time intervals.

The upload spike rate is the increase of the required upload rate in one single time interval during a flash crowd, which is a sudden large surge in the video traffic. This has the advantage that enough spare cache disks are available, even in the event of a flash crowd and right from the start.

According to an embodiment, the activating a number of inactive disks of the cache disks by the control device further comprises:

- activating an inactive disk thereby contributing to a total added read rate by this inactive disk its read rate obtained when it was last active;
- repeating the activating an inactive disk until a sum of this total added read rate and the disk read rate surplus $R_{sp,j}$ is greater or equal than the minimum disk read rate surplus $R_{sp,j}^{min}$.

When an inactive disk is activated, it will contribute to the reduction of the upload rate by its disk read rate. The total contribution of all newly activated disks at the start of the time interval $T_{j+1}$ is the total added read rate. As a disk's read rate is not known for future time intervals, the read rate is approximated by the disks read rate obtained from when it was last active. By adding disks one by one until the added read rate is sufficient the right number of disks are activated corresponding with the actual need and the threshold specified by the minimum disk read rate surplus $R_{sp,j}^{min}$.

Advantageously, the activating an inactive disk according to the embodiment above comprises selecting a disk from the inactive disks which was most recently deactivated during previous time intervals as an inactive disk.

It would be most beneficial to activate an inactive disk that contributes most to the total added read rate. However, the disk's read rate is not known at the time the disk is activated, therefore, the disk that was last deactivated is taken as an approximation. As the content on the last deactivated disk is the most recent content obtained from the content provider, there is a high probability that the last deactivated disk will contribute most to the total added read rate.

According to an embodiment, the control device is further configured to execute the following steps if $R_{sp,j}$ is greater than $R_{sp,j}^{min}$, at the start of the time interval $T_{j+1}$:

- determining an excessive disk read rate surplus as the difference between:

  - the minimum value of disk read rate surpluses determined during a second predetermined number of previous time intervals and

  - the minimum disk read rate surplus $R_{sp,j}^{min}$;

- deactivating a number of active disks of the cache disks if the excessive disk read rate surplus is larger than a potential total reduction of the disk read rate surplus.

The excessive disk read rate surplus is thus the excess in disk read rate surplus after taking into account the threshold defined by the minimum disk read rate surplus $R_{sp,j}^{min}$. It is an advantage that unnecessary cycling between activating and deactivating disks is avoided by considering the disk read rate surpluses determined during several previous time intervals. If the disk read rate surplus would be greater than the minimum disk read rate surplus for only one time interval, no active disks would be deactivated.

Preferably, the deactivating comprises:

- selecting a first active disk from the cache disks with the smallest read rate during said previous time interval $T_j$ thereby contributing to the potential total reduction of the disk read rate surplus; and then
- if said excessive disk read rate surplus is larger than or equal to the potential total reduction of the disk read rate surplus, then deactivating the first active disk and repeating the selecting.

The deactivating is thus an iterative process whereby the disk with the smallest read rate during the previous time interval $T_j$ is deactivated first. The process continues until the total reduction of the disk read rate surplus cannot be increased further without becoming greater than the excessive disk read rate surplus. It is an advantage that the active disk with the smallest disk read rate is deactivated first as this leads to the maximum number of disks that are deactivated within the budget of excessive disk read rate surplus. This leads to a maximum saving in power consumption by deactivating disks.

According to a further embodiment, the control device is further configured to execute the following steps, at the start of the time interval $T_{j+1}$:

- determining a spare download capacity $D_{sp,j}$ during the previous time interval $T_j$ as the difference between a maximum download capacity provisioned during the previous time interval $T_j$ and the required download rate $D_{req,j}$ observed during the previous time interval $T_j$;

- comparing the spare download capacity $D_{sp,j}$ with a minimum spare download capacity $D_{sp,j}^{min}$;

- activating a number of inactive cache servers of the cache servers if $D_{sp,j}$ is smaller than $D_{sp,j}^{min}$.

The maximum download capacity is thus the total maximum capacity of bandwidth available between the considered cache servers in the CDN, for example cache servers of a CDN data centre, and the end-users or between such a CDN data centre and another CDN data centre located more downstream, i.e. closer to the end-users. This maximum download capacity is provided by the active cache servers of the considered cache servers, e.g. the servers in a CDN data centre. The required capacity is then the capacity of bandwidth effectively required to serve all end-user requests.

It is an advantage that cache servers are activated based on observable parameters such as the spare download capacity during the previous time interval making it a usable online power management technique. Therefore, no knowledge is required about the spare download capacity of the CDN in the future. The activation of an extra inactive cache server has a direct relation with the download capacity of the CDN resulting in an accurate metric for deciding whether or not to activate inactive cache servers.

Preferably, the above steps are performed before the activating or deactivating of the cache disks.

Further to the embodiment above, the control device may further be configured to execute the following steps, at the start of the time interval $T_{j+1}$:

- determining the minimum spare download capacity $D_{sp,j}^{min}$ as proportional to a maximum of an increase of a required download rate per time interval observed over a third predetermined number of previous time intervals.

Similar to the activation of cache disks, it is thus observed how the required download rate has changed between time intervals and the minimum spare download capacity is made proportional to the greatest observed change. This way, the minimum spare download capacity is made adaptive. As it is made proportional, a trade-off may be made between availability and energy saving by choosing the appropriate proportionality factor.

Alternatively, the control device according to the embodiment above may further be configured to execute the following steps, at the start of the time interval $T_{j+1}$:

- determining the minimum spare download capacity $D_{sp,j}^{min}$ as proportional to a maximum of:

   - a maximum of an increase of a required download rate per time interval observed over a third predetermined number of previous time intervals;
   - a download spike rate of the largest flash crowd that has occurred in previous time intervals.

The download spike rate is the increase of the required download rate in one single time interval during a flash crowd. This has the advantage that enough spare active cache servers will be available, even in the event of a flash crowd and right from the start.

According to an embodiment, the activating a number of inactive cache servers of the cache servers further comprises:

- activating inactive cache servers according to a last-off first-on policy.

The whole server is thereby activated except for its cache disks as the disks may be activated in a later stage. It is an advantage to follow a last-off first-on policy as a cache server that was last switched off has the greatest probability to contain the most relevant content on its cache drives. Therefore, the activating will not only contribute to the spare download capacity, but will also lead to the smallest increase of the required upload rate.

Preferably, the control device is further configured to execute the following steps, at the start of the time interval $T_{j+1}$:

- deactivating a number of active cache servers of the cache servers if $D_{sp,j}$ is greater than $D_{sp,j}^{min}$ and if the spare download capacity has exceeded the minimum spare download capacity for more than a fourth predetermined number of previous time intervals by at least a server's download capacity; and whereby the deactivating is performed according to a last-on first-off policy.

This allows further reducing the power consumption if the required download rate is low enough. As the server that was last switched on has the highest probability of having cache misses and might not have completely filled its temporary cache yet, this server has the highest probability to contribute the most to the required upload rate. Therefore, it is an advantage to deactivate the last-on server first.

In a second aspect, the invention relates to a method for power management of cache servers in a Content Distribution Network or CDN. The cache servers comprise cache disks and the method comprises, at the start of a time interval $T_{j+1}$:

- determining a disk read rate surplus $R_{sp,j}$ during a previous time interval $T_j$;

- comparing the disk read rate surplus $R_{sp,j}$ with a minimum disk read rate surplus $R_{sp,j}^{min}$;

- activating a number of inactive disks of the cache disks if $R_{sp,j}$ is smaller than $R_{sp,j}^{min}$.

In a third aspect, the invention relates to a computer program product comprising computer-executable instructions for performing the method according to the second aspect when the program is run on a computer.

In a fourth aspect, the invention relates to a computer readable storage medium comprising the computer program product according to the third aspect.

In a fifth aspect, the invention relates to a data processing system programmed for carrying out the method according to the second aspect.

## Brief Description of the Drawings

Fig. 1 illustrates a control device within a data centre of a Content Distribution Network or CDN data centre according to embodiments of the invention;

Fig. 2 illustrates steps executed by a control device for activation and deactivation of cache disks in cache servers of a CDN data centre according to an embodiment;

Fig. 3 illustrates optional steps executed by a control device for determining a proportionality factor used for the calculation of the minimum disk read rate surplus.

Fig. 4 illustrates steps executed by a control device for activating cache disks in cache servers of a CDN data centre according to an embodiment;

Fig. 5 illustrates steps executed by a control device for deactivating cache disks in cache servers of a CDN data centre according to an embodiment;

Fig. 6 illustrates steps executed by a control device for activating cache servers of a CDN data centre according to an embodiment;

Fig. 7 illustrates optional steps executed by a control device for determining a proportionality factor used for the calculation of the minimum spare download capacity;

Fig. 8 illustrates steps executed by a control device for activating cache servers of a CDN data centre according to an embodiment; and

Fig. 9 illustrates steps executed by a control device for deactivating cache servers of a CDN data centre according to an embodiment.

## Detailed Description of Embodiment(s)

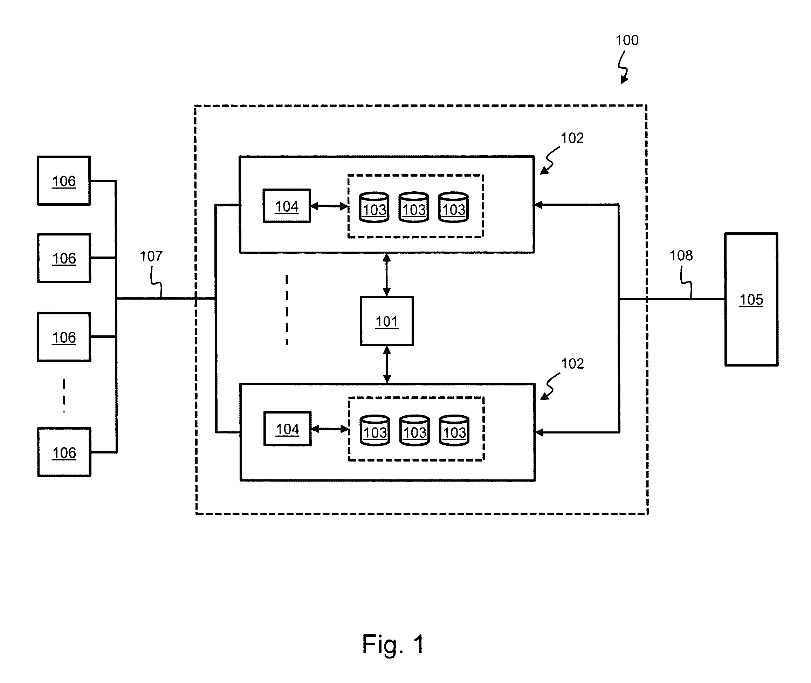

Fig. 1 illustrates a control device 101 for the power management of cache servers 102 in a data centre of a Content Distribution Network or CDN data centre 100. The CDN data centre 100 comprises cache servers 102 for caching digital content provided by a content provider 105 over a data network 108. Content requests coming from user or client devices 106 are first received in the CDN data centre 100 over the data network 107. If the requested content is available in one of the cache servers 102, the CDN data centre provides the digital content from the cache servers over the network 107 to the clients 106. If the CDN does not have the requested content available in one of the cache servers, the requested content is retrieved directly from the content provider 105, stored in one or more cache servers and provided to the requesting client 106.

When using the term download in the embodiments below as in download traffic or download rate, it refers to the data sent downstream, i.e. from the CDN data centre towards the clients 106. When using the term upload as in upload rate or upload capacity, it refers to the upstream data traffic coming from the content provider 105 side towards the CDN data centre 100. It should further be noted that CDNs may be hierarchical whereby the CDN data centre 100 is not directly serving content or data from the content provider 105 to the clients but serves and receives content from another CDN data centre.

A distinction may be made between two sorts of data content that is cached by the CDN. A first type of content is linear content such as for example live-video content or live-streaming content where it is then referred to as linear video. Linear-content may only be consumed by a client 106 at a particular moment in time. For example, for caching linear video, the cache server retrieves the linear video segments, typically a few seconds long, and stores them in temporary memory 104 such as for example Random Access Memory or RAM memory. When its RAM memory is full and a new segment needs to be stored, least-recently used segments are deleted to free enough space to store the new segment. Because the RAM memory is large enough to store the linear video segments during the time window in which they are relevant, for caching linear video and thus linear content in a CDN only temporary storage is needed.

A second type of content is content which should be available for a long time and can be retrieved at any moment by a client. When the content is video, this type of content is referred to as Video on Demand content or VOD content. The lifespan of this type of content is much longer than for linear content. Therefore, VOD content is cached in the cache servers 102 on cache drives 103 such as for example hard disk drives. A cache drive for storing VOD content is a long term storage means that may keep its data even after power cycling the cache server or cache drive.

The control device 101 is configured to execute steps in order to manage the power consumption of the cache servers 102. According to embodiments the control device 101 may activate or deactivate cache disks 103 in the cache servers 102. Also according to embodiments, the control device 101 may activate or deactive a complete cache server 102. By deactivating a cache drive or cache server, it is no longer able to perform its caching but will also consume less power. Deactivating may for example be switching off, hibernating or putting in standby. For a cache disk using platters for storage, deactivating may for example also be spinning down the platters thereby saving power. With activating it is then meant that a cache server or cache disk is made ready for caching and serving content after it has been deactivated before and stayed inactive for a certain time period.

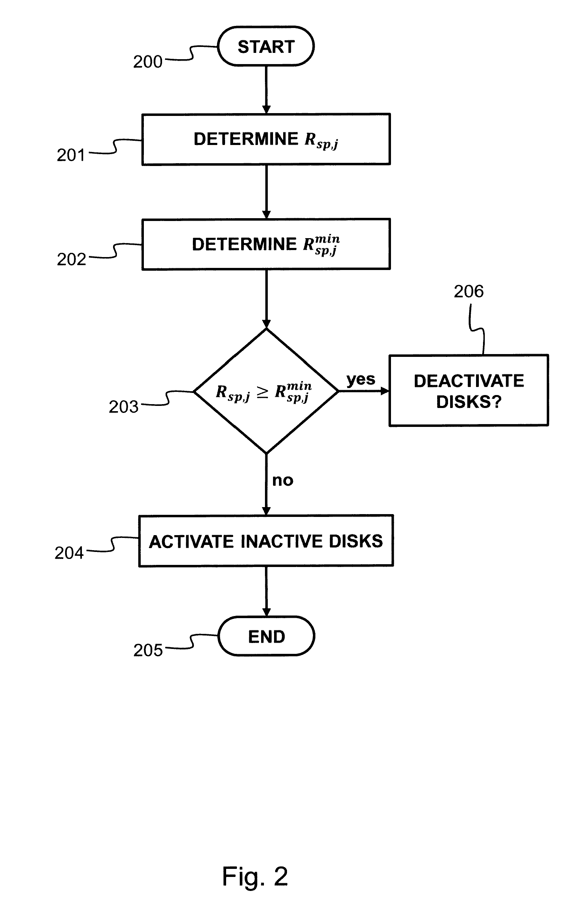

Fig. 2 illustrates steps executed by the control device 101 in order to manage the power consumption of cache servers in a CDN data centre according to an embodiment. The execution of the steps is started with step 200 at the start of a next time interval $T_{j+1}$ whereby the performance of the cache servers and cache disks was observed during previous time intervals and is used to perform the power management. The steps may thus be re-executed at the start of every next time interval. A time interval may further be regular or irregular resulting in fixed or varying time intervals. A typical time interval, for example, would be 5 minutes. According to the steps in Fig. 2 cache drives 103 in the CDN data centre 100 may be activated or it may be decided to check if cache disks can be deactivated. Therefore, the control device 101 will only consider data traffic, i.e. upload and download traffic, corresponding to the second type of content.

At the step 201, the control device 101 determines the disk read rate surplus $R_{sp,j}$. This is the surplus in total disk read rate when considering all active cache disks 103 in all active cache servers 102 that use cache disks 103 of the CDN data centre 100. The disk read rate, i.e. the rate at which content is read from a single disk to be delivered to a client 106 over the network 107, varies over time and will be different for every disk in the cache servers of the CDN data centre 100. A disk's read rate will also depend on the workload of the CDN data centre 100. Every time when an additional disk is activated, the upload rate for VOD data traffic, i.e. the data traffic over the network 108 towards the CDN data centre, will be reduced as content is now served from the additional disk instead of from the content provider 105. A surplus in disk read rate is then the additional read rate offered by the CDN data centre on top of what is required to be delivered. The disk read rate surplus $R_{sp,j}$ for the previous time interval $T_j$ may be obtained according to the following equation Eq. 1 in step 201:

$$R_{sp,j} = U_{max} - U_{req,j} \qquad\qquad \text{(Eq. 1)}$$

whereby

$U_{max}$ represents the predetermined VOD upload rate limit, i.e. the maximum allowed upload rate for VOD traffic that should be guaranteed by the CDN data centre; and
$U_{req,j}$ represents the required VOD upload rate during the previous time interval $T_J$.

The disk read rate surplus is an indication of the ability to cope with an unknown increase of the required upload rate. In order to make sure that the disk read rate surplus is high enough during the next time interval $T_{j+1}$, a minimum disk read rate surplus $R_{sp,j}^{min}$ is determined as a threshold during a next step 202. The control device 101 will then check in a step 203 if additional inactive cache disks 103 should be activated. Additional inactive cache disks will then be activated in the step 204 if the disk read rate surplus $R_{sp,j}$ is below this threshold, i.e. below the minimum disk read rate surplus $R_{sp,j}^{min}$ threshold. In the other case, according to step 206, it is checked whether active cache disks may further be deactivated.

The minimum disk read rate surplus $R_{sp,j}^{min}$ may be obtained by the following equation Eq. 2:

$$R_{sp,j}^{min} = v.\Delta U_{max,j} = v.\left(\max_{j-N_w+1\leq i\leq j}\left(\Delta U_{req,i} + R_{up,i} - R_{dn,i}\right)\right) \text{(Eq. 2)}$$

whereby

$v$ is a proportionality factor controlling the trade-off between bandwidth efficiency by limiting the upload rate, and energy savings by limiting the number of activated cache disks; and

$\Delta U_{max,j}$ is the maximum increase of the required upload rate per time interval observed over a predetermined number of previous time intervals $N_w$; and

$R_{up,i}$ is the total disk read rate of the disks activated at the start of time interval $T_i$; and

$R_{dn,i}$ is the total disk read rate of the disks deactivated at the start of time interval $T_i$.

By the inclusion of the terms $R_{up,i}$ and $R_{dn,i}$ in Eq. 2 an underestimation, respectively overestimation, of the maximum increase of the required VOD upload rate due to disk power-state transitions is avoided.

Optionally, Eq. 2 may be further refined by taking into account the upload spike rate $\sigma_{max}$ which is the upload spike rate of the largest flash crowd known. The spike rate $\sigma$ of a flash crowd is defined as the increase of the required VOD upload rate in a single time interval under constant cache disk power configuration. $\sigma_{max}$ is further expressed as a percentage of the upload rate limit $U_{max}$. This results in the following equation Eq.3 for the minimum disk read rate surplus $R_{sp,j}^{min}$:

$$R_{sp,j}^{min} = v. \max\left(\sigma_{max} U_{max}, \Delta U_{max,j}\right) \qquad \text{(Eq. 3)}$$

This refinement of the minimum disk read rate surplus ensures a high bandwidth efficiency right from the start even in the event of a flash crowd. A flash crowd is a sudden large increase in the content traffic and thus video traffic in the case of VOD.

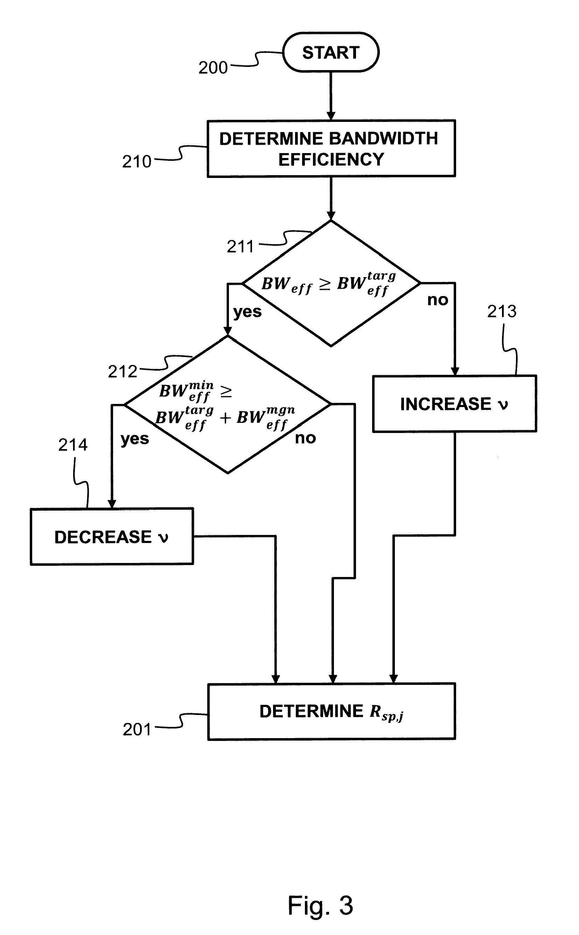

Optionally, the proportionality factor $v$ may be determined dynamically at the start 200 of the next time interval $T_{j+1}$. This is illustrated by Fig. 3 where steps executed by the control device 101 are shown before the step 201 where the disk read rate surplus is determined. In a first step 210, the bandwidth efficiency $BW_{eff}$ is determined. This bandwidth efficiency is defined as the percentage of the uploaded bytes that can be transported from the origin server 105 to the cache servers 102 in the CDN data centre 100 at a rate below a predetermined limit. In the next step 211, it is assessed whether the bandwidth efficiency $BW_{eff}$ exceeds a predefined target bandwidth efficiency $BW_{eff}^{targ}$. If not, the factor $v$ is increased in the step 213 in order to increase the bandwidth efficiency during following time intervals. This increasing may for example be done by multiplying $v$ with a predetermined factor greater than one. If the efficiency is higher than the target efficiency, the control device 101 proceeds to step 212 where it is assessed whether:

$$BW_{eff}^{min} \geq BW_{eff}^{targ} + BW_{eff}^{mgn} \qquad \text{(Eq. 3a)}$$

whereby

$BW_{eff}^{min}$ is the minimum of the bandwidth efficiencies obtained during a predefined number of previous time intervals; and

$BW_{eff}^{mgn}$ is a configurable margin.

Eq. 3a returns true, it means that the bandwidth efficiency is considered excessively high and the factor $v$ is decreased in step 214. Otherwise, the factor $v$ stays unchanged. The decreasing of the factor $v$ may for example be done by multiplying it with a predetermined factor between zero and one.

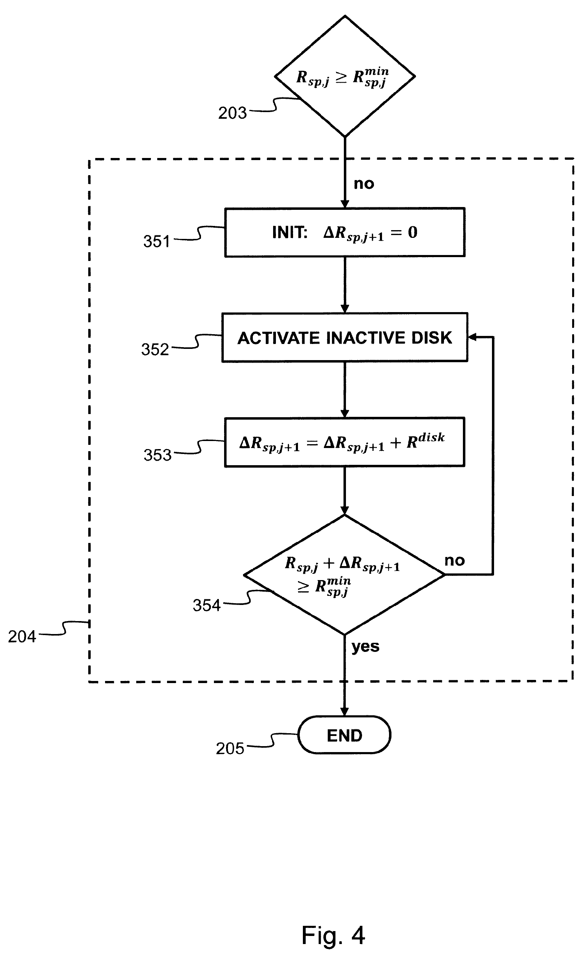

Fig. 4 illustrates the activating of inactive disks by the control device 101 within step 204 of Fig.2 according to an embodiment. In a first step 351 a total added read rate $\Delta R_{sp,j+1}$ is initialized to zero. This total added read rate is the sum of the read rates of the cache disks activated at the start of time interval $T_{j+1}$ under the next step 352. In this next step 352 an inactive cache disk is activated. Then, in step 353, the read rate $R^{disk}$ of the just activated disk is added to the total added read rate:

$$\Delta R_{sp,j+1}^{new} = \Delta R_{sp,j+1}^{old} + R^{disk} \qquad \text{(Eq. 4)}$$

As the read rate of this activated disk for the time interval $T_{j+1}$ is not yet known at the start of this time interval, the read rate $R^{disk}$ of the disk is approximated by the disk's read rate obtained during the most recent interval that it was active. The content stored on an inactive disk tends to become less relevant to the clients 106. An inactive disk's most relevant content is typically removed upon disk reactivation because this content was already duplicated on active disks before the reactivation of the disk under consideration. Therefore, the approximation using the last known read rate is most probably an overestimation. This may be taken into account by the proportionality factor $v$ in equations 2 and 3. As the approximation by the last known read rate does not take into account the period during which the cache disk was inactive, the inactive disk in step 352 is advantageously chosen according to a last-off first-on policy, i.e. in step 352 the disk is selected which was most recently made inactive and activated.

Then, in step 354, it is assessed whether:

$$R_{sp,j} + \Delta R_{sp,j+1} \geq R_{sp,j}^{min} \qquad \text{(Eq. 5)}$$

If Eq. 5 returns true, enough inactive cache disks were activated and the execution of the steps is ended until a next time interval. If Eq. 5 returns false, steps 352, 353 and 354 are repeated until Eq. 5 returns true.

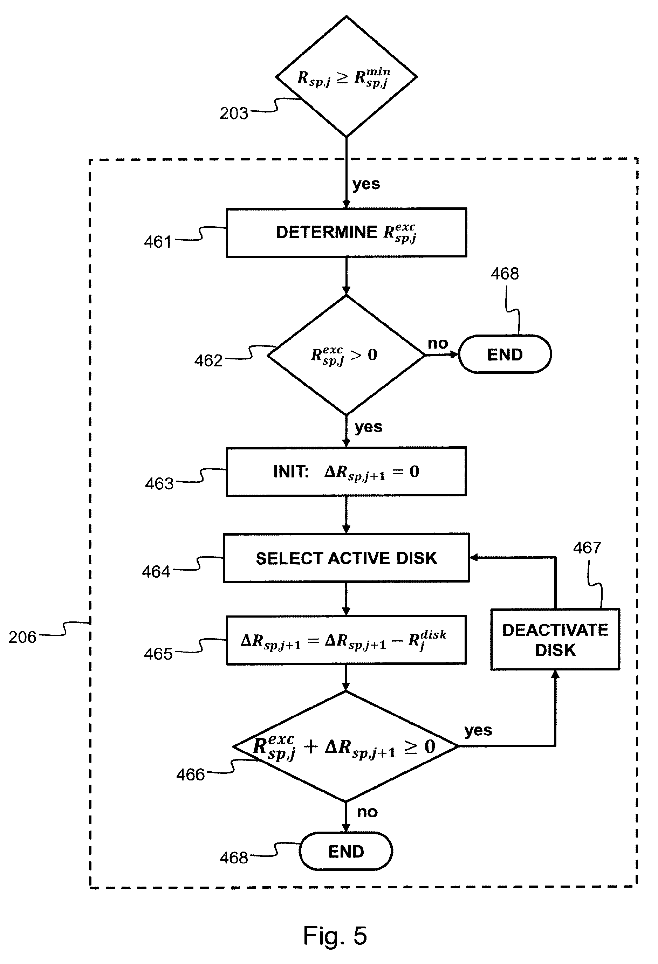

According to the steps illustrated by Fig. 4, cache disks are turned on. Accordingly, the control device 101 may also deactivate cache disks if the disk read rate surplus is excessively large. This is illustrated by Fig. 5 where the deactivating of active disks by the control device 101 within step 206 is shown according to an embodiment. First, in step 461, an excessive disk read rate surplus $R_{sp,j}^{exc}$ is determined. Cache disks will then only be deactivated if it is determined during the optional step 462 that this excessive disk read rate surplus $R_{sp,j}^{exc}$ is positive. In order to avoid that cache disks are continuously activated and deactivated during consecutive time intervals, the excessive disk read rate surplus $R_{sp,j}^{exc}$ may take into account the disk read rate surpluses from several previous time intervals by determining it as follows:

$$R_{sp,j}^{exc} = \min_{j-N_v+1 \leq i \leq j}\left(R_{sp,i}\right) - R_{sp,j}^{min} \qquad \text{(Eq. 6)}$$

whereby

$N_v$ is the number of time intervals over which the disk read rate surpluses are considered; and
$R_{sp,i}$ is the disk read rate surplus during a time interval $T_i$ from the number of previous time intervals $N_v$.

Similar to step 351 of Fig. 4, the total added read rate surplus $\Delta R_{sp,j+1}$ is then initialized to zero in step 463. Then, in a next step 464, an active disk is selected as a next candidate for deactivation. The selected disk's read rate $R_j^{disk}$ during the previous time interval $T_j$ is then subtracted from the total added read rate surplus $\Delta R_{sp,j+1}$ in the next step 465:

$$\Delta R_{sp,j+1}^{new} = \Delta R_{sp,j+1}^{old} - R_j^{disk} \qquad \text{(Eq. 7)}$$

In other words, the selected disk would contribute to a potential total reduction of disk read rate surplus upon deactivation. Advantageously, the disk with the smallest disk read rate is selected as this results in the greatest number of disks that can be deactivated. In the step 466 it is then assessed whether:

$$R_{sp,j}^{exc} + \Delta R_{sp,j+1} \geq 0 \qquad \text{(Eq. 8)}$$

If Eq. 8 returns false, deactivating the selected disk would result in a reduction in the total disk read rate surplus greater than the excessive disk read rate surplus $R_{sp,j}^{exc}$, and therefore, the control device 101 moves on to step 468. If Eq. 8 returns true, the control device proceeds to step 467 and deactivates the selected cache disks. Steps 464, 465 and 466 are then repeated until Eq. 8 returns false. In other words, as long as the potential total reduction of the disk read rate surplus by Eq. 7 is smaller than the excessive disk read rate surplus, the selected cache disk is deactivated.

According to further embodiments described below, before activating or deactivating cache disks, the control device 101 may also assess whether to activate or deactivate complete cache servers. A difference is hereby made between two types of cache servers, i.e. cache servers using cache disks for serving VOD content and cache servers not using cache disks, for example for serving linear content or video. The decision to activate or deactivate complete cache servers at the beginning of a time interval may then be made separately for the two types of cache servers. As the steps taken for the two types of servers are almost the same, the embodiments below are described for the general case and the distinction between the two types is made when applicable. When speaking about download capacity in the embodiments below, this refers to the download capacity of the type of servers under consideration, i.e. the ones using or not using cache disks. When speaking about download rate in the embodiments below, this refers to the download rate of the type of content relevant for the type of cache server under consideration.

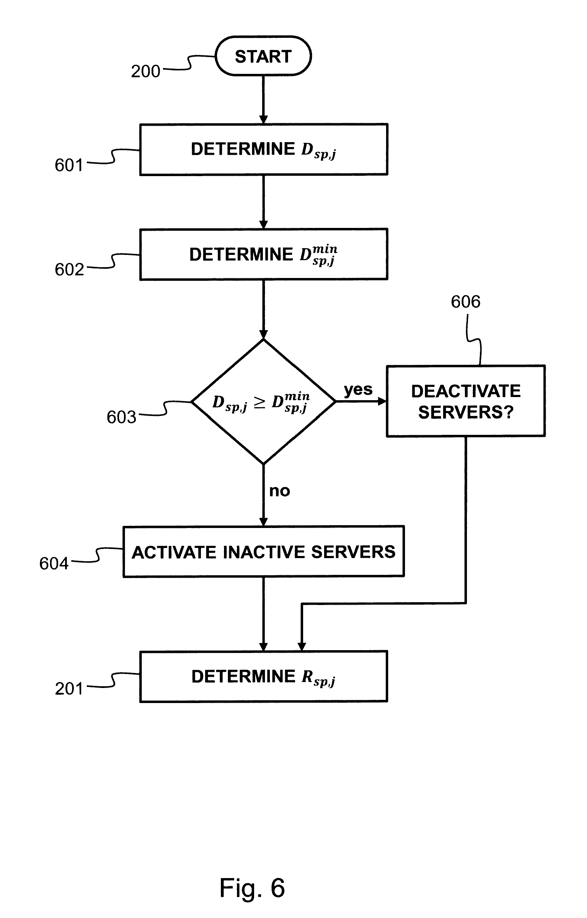

Fig. 6 illustrates steps executed by the control device 101 in order to manage the power consumption of cache servers 102 in a CDN data centre 100 according to an embodiment by activating or deactivating cache servers. When a cache server 102 is deactivated it no longer contributes to the CDN data centre 100, but also consumes less power. In general, by the steps of Fig. 6, a high availability is ensured by activating a sufficient number of cache servers 102 such that the download capacity of the CDN data centre is larger than or equal to the required download rate. At the start 200 of a new time interval $T_{j+1}$ it is assessed whether new cache servers 102 should be activated in order to bring the download capacity above the required level whereby the performance of the cache servers 102 and cache disks 103 was observed during previous time intervals and is used to perform the power management. The steps may thus be re-executed at the start of every next time interval. A time interval may further be regular or irregular resulting in fixed or varying intervals. For example, an adequate time interval may be 5 minutes.

At the step 601, the control device 101 determines the spare download capacity $D_{sp,j}$. This is the surplus in the total download capacity offered by the CDN data centre 100 to the clients 106 when considering all active cache servers 102 of the CDN data centre 100, i.e. all cache servers using cache disks or all cache servers not using cache disks. The spare download capacity for the next time interval $T_{j+1}$ may be calculated as the difference between the maximum download capacity offered by the active servers in the CDN centre and the actual required download rate in the time interval $T_{j+1}$. As the required download rate for the next time interval is not known at the beginning of the time interval, the spare download capacity for the next interval is approximated by the spare download capacity of the previous time interval:

$$D_{sp,j} = D_{max,j} - D_{req,j} \qquad\qquad \text{(Eq. 9)}$$

whereby

$D_{max,j}$ represents the maximum download capacity provisioned by the active cache servers during the previous time interval $T_j$; and
$D_{req,j}$ represents the required download rate observed during the last and thus previous time interval $T_j$.

The spare download capacity is an indication of the ability to cope with an unknown increase of the required download rate. In order to make sure that the spare download capacity is high enough during the next time interval $T_{j+1}$, a minimum spare download capacity $D_{sp,j}^{min}$ is determined as a threshold during a next step 602. The control device 101 will then check in a step 603 if additional inactive cache servers 102 should be activated. Additional inactive cache servers will then be activated in the step 604 if the spare download capacity $D_{sp,j}$ is below this threshold, i.e. below the minimum spare download capacity $D_{sp,j}^{min}$ threshold. In the other case, active cache servers may further be deactivated according to step 606.

The minimum spare download capacity $D_{sp,j}^{min}$ may be obtained as proportional to the maximum increase per time interval of the required download rate observed over a time window of $N_w$ time intervals as shown by the following equation Eq. 10:

$$D_{sp,j}^{min} = \mu . \Delta D_{max,j} = \mu . \left( \max_{j - N_w + 1 \le i \le j} \left( D_{req,i} - D_{req,i-1} \right) \right) \quad \text{(Eq. 10)}$$

whereby

$\mu$ is a proportionality factor controlling the trade-off between availability and energy savings; and
$\Delta D_{max,j}$ is the maximum increase per time interval of the required download rate observed over a predefined number $N_W$ of time intervals; and
$D_{req,i}$ is the required download rate during a previous time interval $T_i$; and
$D_{req,i-1}$ is the required download rate during the time interval just before the time interval $T_i$.

Optionally, Eq. 10 may be further refined by taking into account the download spike rate $\rho_{max}$ which is defined as the increase of the required download rate in one time interval during the largest flash crowd observed in history expressed as a percentage of the maximum download capacity when all cache servers would be active, i.e. $D_{max}$. This results in the following equation Eq.11 for the minimum spare download capacity $D_{sp,j}^{min}$:

$$D_{sp,j}^{min} = \mu . \max\left(\rho_{max} D_{max}, \Delta D_{max,j}\right) \qquad \text{(Eq. 11)}$$

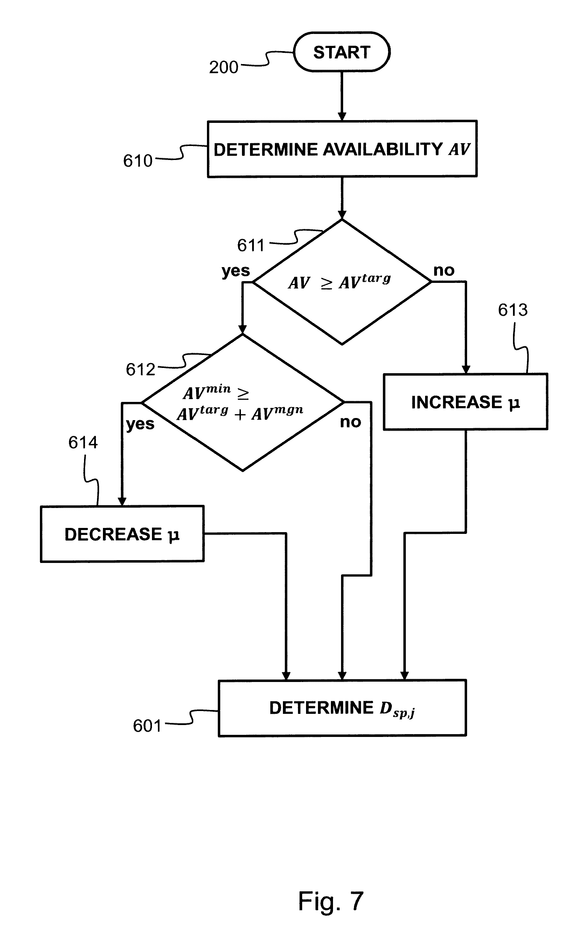

Optionally, the proportionality factor $\mu$ may be determined dynamically at the start 200 of the next time interval $T_{j+1}$. This is illustrated by Fig. 7 where steps executed by the control device 101 are shown before the step 601 where the spare download capacity is determined. In a first step 610, the availability $AV$ is determined. The availability $AV$ is defined as the percentage of requested bytes that can be delivered from the cache servers to the clients 106. In the next step 611, it is assessed whether the availability $AV$ exceeds a predefined target availability $AV^{targ}$. If not, the factor $\mu$ is increased in the step 613 in order to increase the bandwidth efficiency during following time intervals. This may for example be done by multiplying it with a fixed predetermined constant greater than one. If the availability is higher than the target availability, the control device 101 proceeds to step 612 where it is assessed whether:

$$AV^{min} \geq AV^{targ} + AV^{mgn} \qquad \text{(Eq. 12)}$$

whereby

$AV^{min}$ is the minimum of the observed availability during a predefined number of previous time intervals; and
$AV^{mgn}$ is a configurable margin.

If Eq. 12 returns true, it means that the bandwidth efficiency is considered excessively high and the factor $\mu$ is decreased in step 614. This may for example be done by multiplying $\mu$ by a fixed factor between zero and one.

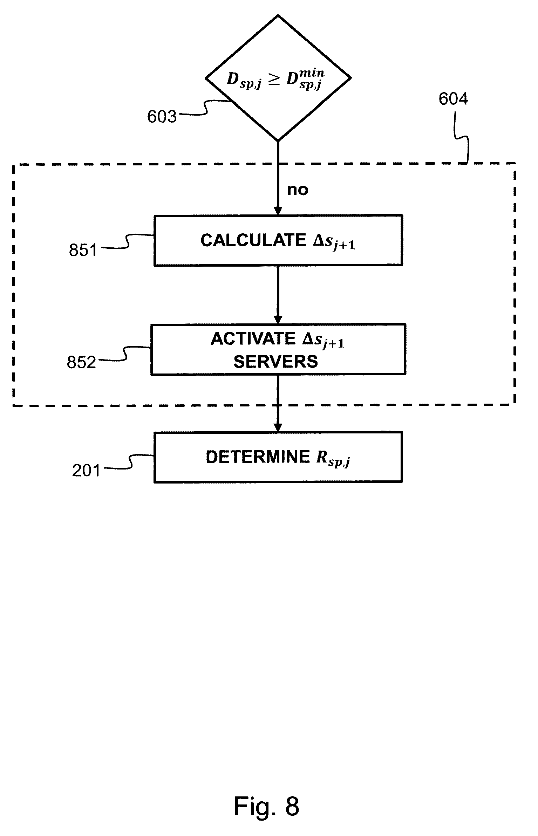

Fig. 8 illustrates steps executed by the control device 101 in order to activate inactive cache servers according to an embodiment. When it has been determined under step 603 of Fig. 6 that extra cache servers should be activated, the control device proceeds to step 851. By activating extra cache servers, spare download capacity $\Delta D_{sp,j+1}$ is added at the start of the time interval $T_{j+1}$. This additional spare download capacity is proportional to the number of additional active server that will be added, i.e.

$$\Delta D_{sp,j+1} = \Delta s_{j+1} D_{max}^{sv} \qquad \text{(Eq. 13)}$$

whereby

$\Delta D_{sp,j+1}$ is the added spare download capacity; and
$D_{max}^{sv}$ is the maximum download capacity of a single cache server; and $\Delta s_{j+1}$ is the number of additional cache servers that will be added at the beginning of the time interval $T_{j+1}$.

If the cache servers contain cache disks, these disks never become the system's bottleneck because a cache server obtains a requested file stored on an overloaded disk directly from the origin server. More servers are activated until $D_{sp,j} + \Delta D_{sp,j+1} \geq D_{sp,j}^{min}$. Therefore, the number of cache servers to be activated may be determined during step 851 according to the following equation Eq. 14:

$$\Delta s_{j+1} = \left\lceil \frac{D_{sp,j}^{min} - D_{sp,j}}{D_{max}^{sv}} \right\rceil \qquad \text{(Eq. 14)}$$

Because of the rounding up to the nearest integer, there may be one server activation too much as the activation of servers is done separately for each type of cache server. Therefore, if the sum of the round-up error for the servers using disks and the round-up error for the servers not using disks is larger than one, then Eq. 14 uses rounding down instead of up when determining the number of servers to activate not using cache disks. As a result, some linear content may be delivered from a cache server using disks.

Then, in the next step 852, the determined number of cache servers is activated. For the servers without disks, it doesn't matter which servers are activated. However, for the servers with disks, the servers to activate need to be selected with bandwidth efficiency in mind. To minimize the number of disks to activate in later steps according to the embodiment illustrated by Fig. 2, the servers to activate may be selected in the order of decreasing expected disk cache efficiency. The shorter a server was powered down, the better its disk cache efficiency is expected to be. Therefore, the determined number of cache servers are activated in step 852 according to a last-off first-on policy, i.e. the cache server that was last deactivated during previous time interval is activated first in step 852.

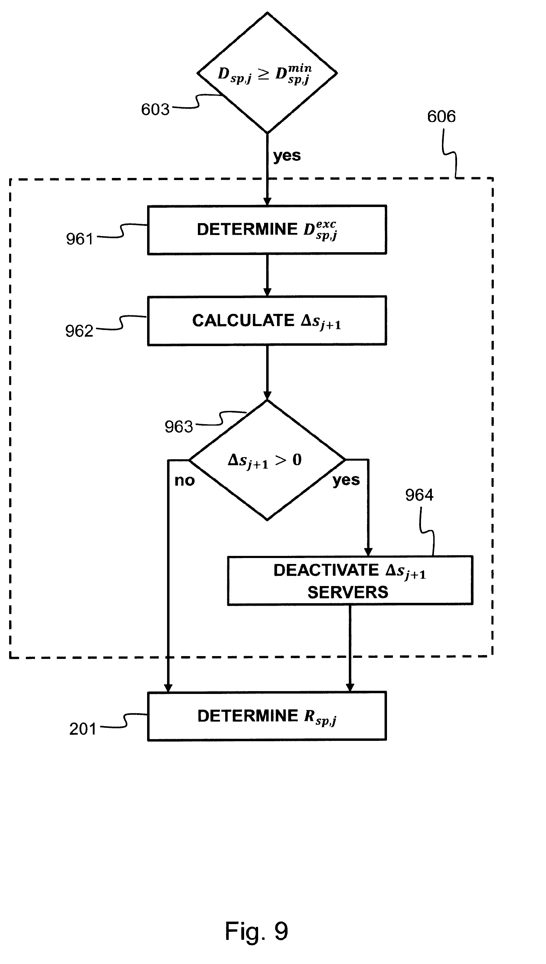

If no additional servers had to be activated, then it may be assessed whether servers can be deactivated to save energy as already indicated by step 606 of Fig. 6. Again, this is done separately for the two types of cache servers, i.e. using cache disks or not. This is further illustrated by Fig. 9 according to an embodiment. According to this embodiment, servers are only deactivated if the spare download capacity is found to be excessive in order to limit the number server power-state transitions which may have a negative influence on the life-time of the cache servers. In order to do so, the excessive spare download capacity $D_{sp,j}^{exc}$ is determined in a step 961 according to the equation Eq. 15 below:

$$D_{sp,j}^{exc} = \min_{j-N_\tau+1 \leq i \leq j}\left(D_{sp,i}\right) - D_{sp,j}^{min} \qquad \text{(Eq. 15)}$$

whereby

$N_\tau$ is the number of time intervals over which the spare download capacity is considered; and
$D_{sp,i}$ is the spare download capacity during a time interval $T_i$ from the number of previous time intervals $N_\tau$

The spare download capacity is thus only considered excessive if it rises above the minimum spare download capacity for a number of $N_\tau$ consequent time intervals. From the excessive spare download capacity, the number of servers $\Delta s_{j+1}$ that may be deactivated is calculated in a step 962 as follows:

$$\Delta s_{j+1} = \left\lfloor \frac{D_{sp,j}^{exc}}{D_{max}^{sv}} \right\rfloor \qquad \text{(Eq. 16)}$$

Then, in step 964, a number of servers $\Delta s_{j+1}$ is deactivated. Because in Eq. 16 there is a rounding down that would be applied both when deactivating the cache servers using and not using cache disks, there may be one additional server that could be deactivated. Therefore, for the servers without disks, the rounding is done up instead of down if the sum of the round-down error for the servers without disks and the round-down error for the servers with disks is larger than one.

As the cache disks 103 or temporary memory 104 of the cache servers that were last activated most probably comprise the least relevant content, the servers in step 964 are deactivated according to a last-on first-off policy.

The various embodiments above have described steps to be executed by the control device 101 as shown in Fig. 1 The various steps may be programmed as software which is compiled into a computer program and run as instructions executed on a processor which is part of the control device 101. This way, the control device 101 may be a functional entity which is part of one of the cache servers or any other computing system within the CDN data centre 100. The control device 101 may also be provided outside the CDN data centre and communicate with the CDN data centre over a data network in order to execute the steps according to the various embodiments.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A control device (101) for power management of cache servers (102) in a Content Distribution Network or CDN (100); said cache servers (102) comprising cache disks (103); said control device (101) further being configured to execute the following steps, at the start of a time interval $T_{j+1}$ :

   - determining (201) a disk read rate surplus $R_{sp,j}$ during a previous time interval $T_j$;

   - comparing (203) said disk read rate surplus $R_{sp,j}$ with a minimum disk read rate surplus $R_{sp,j}^{min}$ ; .

   - activating (204) a number of inactive disks of said cache disks if $R_{sp,j}$ is smaller than $R_{sp,j}^{min}$ .

2. A control device (101) according to claim 1 wherein said disk read rate surplus $R_{sp,j}$ is the difference between a predetermined upload rate limit and a required upload rate observed during said previous time interval $T_j$.

3. A control device (101) according to claim 1 further being configured to execute the following steps, at the start of said time interval $T_{j+1}$:

   - determining (202) said minimum disk read rate surplus $R_{sp,j}^{min}$ as proportional to a maximum increase of a required upload rate per time interval observed over a first predetermined number of previous time intervals.

4. A control device (101) according to claim 1 further being configured to execute the following steps, at the start of said time interval $T_{j+1}$:

   - determining (202) said minimum disk read rate surplus $R_{sp,j}^{min}$ as proportional to a maximum of:

     - a maximum increase of a required upload rate per time interval observed over a first predetermined number of previous time intervals;
     - an upload spike rate of the largest flash crowd observed during previous time intervals.

5. A control device (101) according to claim 1 wherein said activating (204) further comprises:

     - activating (352) an inactive disk thereby contributing (353) to a total added read rate by said inactive disk its read rate obtained when it was last active;
     - repeating said activating (352) an inactive disk until (354) a sum of said total added read rate and said disk read rate surplus $R_{sp,j}$ is greater or equal than said minimum disk read rate surplus $R_{sp,j}^{min}$ .

6. A control device (101) according to claim 5 whereby said activating (352) said inactive disk comprises selecting a disk from said inactive disks which was most recently deactivated during previous time intervals as said inactive disk.

7. A control device (101) according to claim 1 further being configured to execute the following steps if (203) $R_{sp,j}$ is greater than $R_{sp,j}^{min}$, at the start of said time interval $T_{j+1}$:

- determining (461) an excessive disk read rate surplus as the difference between:

- the minimum value of disk read rate surpluses determined during a second predetermined number of previous time intervals and
- said minimum disk read rate surplus $R_{sp,j}^{min}$;

- deactivating (467) a number of active disks of said cache disks if (462) said excessive disk read rate surplus is larger than a potential total reduction of said disk read rate surplus.

8. A control device (101) according to claim 7 wherein said deactivating (467) comprises:

- selecting (464) a selected active disk from said cache disks with the smallest read rate during said previous time interval $T_j$ thereby contributing (465) to said potential total reduction of said disk read rate surplus; and then
- if (466) said excessive disk read rate surplus is larger than or equal to said potential total reduction of said disk read rate surplus, then deactivating (467) said selected active disk and repeating said selecting (464).

9. A control device (101) according to claim 1 further being configured to execute the following steps, at the start of said time interval $T_{j+1}$:

- determining (601) a spare download capacity $D_{sp,j}$ during said previous time interval $T_j$ as the difference between a maximum download capacity provisioned during said previous time interval $T_j$ and a required download rate $D_{req,j}$ observed during said previous time interval $T_j$;

- comparing (603) said spare download capacity $D_{sp,j}$ with a minimum spare download capacity $D_{sp,j}^{min}$;

- activating (604) a number of inactive cache servers of said cache servers if $D_{sp,j}$ is smaller than $D_{sp,j}^{min}$.

10. A control device (101) according to claim 9 further being configured to execute the following steps, at the start of said time interval $T_{j+1}$:

- determining (602) said minimum spare download capacity $D_{sp,j}^{min}$ as proportional to a maximum of an increase of a required download rate per time interval observed over a third predetermined number of previous time intervals.

11. A control device (101) according to claim 9 further being configured to execute the following steps, at the start of said time interval $T_{j+1}$:

- determining (602) said minimum spare download capacity $D_{sp,j}^{min}$ as proportional to a maximum of:

- a maximum of an increase of a required download rate per time interval observed over a third predetermined number of previous time intervals;
- a download spike rate of the largest flash crowd that has occurred in previous time intervals.

12. A control device (101) according to claim 9 wherein said activating (604) further comprises:

- activating (852) inactive cache servers according to a last-off first-on policy.

13. A control device according to claim 9 further being configured to execute the following steps, at the start of said time interval $T_{j+1}$:

- deactivating (964) a number of active cache servers of said cache servers if (603) $D_{sp,j}$ is greater than $D_{sp,j}^{min}$ and if the spare download capacity has exceeded said minimum spare download capacity for more than a fourth predetermined number of previous time intervals by at least a server's download capacity; and whereby said deactivating (964) is performed according to a last-on first-off policy.

14. A method for power management of cache servers (102) in a Content Distribution Network or CDN (100); said cache servers (102) comprising cache disks (103); the method comprising, at the start of a time interval $T_{j+1}$:

- determining (201) a disk read rate surplus $R_{sp,j}$ during a previous time interval $T_j$;

- comparing (203) said disk read rate surplus $R_{sp,j}$ with a minimum disk read rate surplus $R_{sp,j}^{min}$;

- activating (204) a number of inactive disks of said cache disks if $R_{sp,j}$ is smaller than $R_{sp,j}^{min}$.

15. A computer program product comprising computer-executable instructions for performing the method according to claim 14 when the program is run on a computer.

16. A computer readable storage medium comprising the computer program product according to claim 15.

17. A data processing system programmed for carrying out the method according to claim 14.

Fig. 1

EP 2 894 558 A1

Fig. 2

**Fig. 3**

203 — $R_{sp,j} \geq R_{sp,j}^{min}$

no

351 — INIT: $\Delta R_{sp,j+1} = 0$

352 — ACTIVATE INACTIVE DISK

353 — $\Delta R_{sp,j+1} = \Delta R_{sp,j+1} + R^{disk}$

354 — $R_{sp,j} + \Delta R_{sp,j+1} \geq R_{sp,j}^{min}$

no

204

yes

205 — END

Fig. 4

Fig. 5

START

200

601 DETERMINE $D_{sp,j}$

602 DETERMINE $D_{sp,j}^{min}$

606

603 $D_{sp,j} \geq D_{sp,j}^{min}$ —yes→ DEACTIVATE SERVERS?

no

604 ACTIVATE INACTIVE SERVERS

201 DETERMINE $R_{sp,j}$

Fig. 6

START

200

DETERMINE AVAILABILITY $AV$

610

611

yes    $AV \geq AV^{targ}$    no

613

612    $AV^{min} \geq$
$AV^{targ} + AV^{mgn}$

INCREASE μ

614

yes    no

DECREASE μ

DETERMINE $D_{sp,j}$

601

Fig. 7

Fig. 8

$$D_{sp,j} \geq D_{sp,j}^{min}$$

603

yes

606

961 — DETERMINE $D_{sp,j}^{exc}$

962 — CALCULATE $\Delta s_{j+1}$

963

$$\Delta s_{j+1} > 0$$

no    yes

964

DEACTIVATE $\Delta s_{j+1}$
SERVERS

201 — DETERMINE $R_{sp,j}$

Fig. 9

Europäisches
Patentamt

European
Patent Office

Office européen
des brevets

# EUROPEAN SEARCH REPORT

Application Number

EP 14 36 8009

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BOSTOEN TOM ET AL: "Minimizing Energy Dissipation in Content Distribution Networks Using Dynamic Power Management", 2013 INTERNATIONAL CONFERENCE ON CLOUD AND GREEN COMPUTING, IEEE, 30 September 2013 (2013-09-30), pages 203-210, XP032534520, DOI: 10.1109/CGC.2013.40 [retrieved on 2013-12-17] | 1,9-19 | INV. G06F3/06 |
| Y | * page 205 - page 207 * | 2-8 | |
| Y | US 2009/006877 A1 (LUBBERS CLARK EDWARD [US] ET AL) 1 January 2009 (2009-01-01) * paragraph [0032] - paragraph [0058] * | 2-8 | |

| | TECHNICAL FIELDS SEARCHED (IPC) |
|---|---|
| | G06F<br>H04N<br>H04L |

The present search report has been drawn up for all claims

| Place of search | Date of completion of the search | Examiner |
|---|---|---|
| The Hague | 15 May 2014 | Alliot, Sylvain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 36 8009

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2014

| Patent document cited in search report | | Publication date | Patent family member(s) | | Publication date |
|---|---|---|---|---|---|
| US 2009006877 | A1 | 01-01-2009 | JP<br>JP<br>US | 5236365 B2<br>2009009576 A<br>2009006877 A1 | 17-07-2013<br>15-01-2009<br>01-01-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **V. MATHEW et al.** Energy-aware load balancing in content delivery networks. *Proceedings of the 31st annual IEEE international conference on computer communications, INFOCOM '12,* 2012, 954-962

- **T. BOSTOEN et al.** Minimizing energy dissipation in content distribution networks using dynamic power management. *Proceedings of the 3rd IEEE International Conference on Cloud and Green Computing, CGC '13,* 2013, 203-210